Europäisches Patentamt

European Patent Office

Office européen des brevets

(19)

(11) Veröffentlichungsnummer: **0 185 993**
**B1**

(12) # EUROPÄISCHE PATENTSCHRIFT

(45) Veröffentlichungstag der Patentschrift:
**31.01.90**

(51) Int. Cl.⁴: **B 60 J 7/05,** B 60 J 7/04,
B 60 J 7/057

(21) Anmeldenummer: **85115421.1**

(22) Anmeldetag: **05.12.85**

(54) Schiebehebedach.

(30) Priorität: **08.12.84 DE 3444841**

(43) Veröffentlichungstag der Anmeldung:
**02.07.86 Patentblatt 86/27**

(45) Bekanntmachung des Hinweises auf die Patenterteilung:
**31.01.90 Patentblatt 90/5**

(84) Benannte Vertragsstaaten:
**DE FR GB IT SE**

(56) Entgegenhaltungen:
EP-A- 0 150 470
FR-A- 2 499 914
FR-A- 2 503 057
US-A- 3 964 784

(73) Patentinhaber: **Bayerische Motoren Werke
Aktiengesellschaft, Patentabteilung
AJ-3 Postfach 40 02 40 Petuelring 130,
D-8000 München 40 (DE)**

(72) Erfinder: **Ball, Wilfried, Breslauerstrasse 24,
D-8312 Dingolfing (DE)**
Erfinder: **Clausen-Schaumann, Andreas,
Jägerstrasse 15, D-8139 Bernried (DE)**

(74) Vertreter: **Dexheimer, Rolf, Bayerische Motoren Werke
Aktiengesellschaft Postfach 40 02 40 Petuelring 130 -
AJ-21, D-8000 München 40 (DE)**

**Beschreibung**

Die Erfindung betrifft ein Schiebehebedach für ein Fahrzeug, insbesondere ein Kraftfahrzeug, mit einem Deckel, der aus einer Schliessstellung in eine Aufbewahrungsstellung verschiebbar ist, in der sich der Deckel wenigstens teilweise in einem im Fahrzeugdach ausgebildeten Aufnahmeraum befindet und der ferner, ausgehend von der Schliessstellung, um seine Vorderkante nach oben schwenkbar ist, sowie mit einer unterhalb des Deckels angeordneten Schiebeblende, die mit ihren Seiten in karosserieseitig befestigten Führungsschienen zwischen der Schliessstellung und der Öffnungsstellung im Fahrzeugdach verschiebbar ist, mit einer Verstelleinrichtung, die beim Nachobenschwenken des Deckels die Schiebeblende aus ihrer Schliessstellung ein Stück in Richtung Öffnungsstellung verlagert.

Ein derartiges Schiebehebedach ist durch die nicht vorveröffentlichte EP-A 0 150 470 bekannt. Da diese Druckschrift unter Art. 54 (3) und (4) E.P.Ü. fällt, ist sie für die Frage der erfinderischen Tätigkeit ohne Bedeutung. Dieses Schiebehebedach weist eine Deckelverstelleinrichtung mit je einem seitlichen Antriebsseil auf. Beim Ausstellen des Deckels kommen die in Fahrzeuglängsrichtung verlaufenden Seilenden der Antriebskabel bereits nach einem kurzen Verstellweg an je einer Stützschulter an der Schiebeblende zur Anlage. Wird der Deckel weiter beispielsweise in die vollständig ausgestellte Lage ausgestellt, so wird die Schiebeblende von den Seilenden ein kleines Stück von etwa 35 mm zurückverlagert, so dass sich ein kleiner Lüftungsspalt bildet. Ein wesentlicher Nachteil ist, dass über diesen Lüftungsspalt keine zugfreie Be- oder Entlüftung des Fahrzeuginneren möglich ist. Durch den kleinen Lüftungsspalt werden unangenehme Windgeräusche verursacht, die eine Verständigung im Fahrzeuginnern erschweren. Eine über die geringe Rückverlagerung hinausgehende Rückverstellung der Schiebeblende beim Ausstellen des Deckels ist mit dieser Verstelleinrichtung nicht möglich, da sonst die Seilenden aus den dachfesten Seilführungen zu sehr nach hinten hervortreten und dadurch bei Drckbelastung leicht ausknicken können. In diesem Fall lässt sich das durch Ausknicken im Durchmesser vergrösserte Antriebsseil nicht ohne weiteres in die Seilführung zurückverlagern, wodurch sich das Fahrzeugdach eventuell nicht schliessen lässt.

Aufgabe der Erfindung ist es, ein Schiebehebedach der eingangs genannten Art anzugeben, bei dem eine weitgehend zugfreie und geräuscharme Be- oder Entlüftung des Fahrzeuginnenraumes bei ausgestelltem Deckel möglich ist.

Diese Aufgabe ist durch die im Patentanspruch 1 angegebenen Merkmale gelöst. Besonders vorteilhaft ist, dass die Verstelleinrichtung sowohl beim Ausstellen des Deckels die Schiebeblende in eine Lüftungsstellung zurückverlagert als auch beim Einschwenken des Deckels eine umgekehrte Verlagerung der Schiebeblende in die Schliessstellung bewirkt, in der die Dachöffnung von dem Deckel geschlossen ist. Die Bewegung der Schiebeblende kann so auf die Deckelausstellung abgestimmt sein, dass sich in jeder Deckelausstellage ein zug- und geräuschfreier Be- oder Entlüftungsspalt bildet. Durch die Zwangskoppelung der Schwenkbewegung des Deckels mit der Schiebeblende ist es nicht erforderlich, die Schiebeblende von Hand zu verschieben, um die in bezug auf Geräusch und Zugluft günstigste Stellung zu bestimmen. Vorteilhafte Ausgestaltungen der Erfindung sind Gegenstand von Unteransprüchen.

Vier Ausführungsbeispiele der Erfindung werden anhand der Zeichnung näher erläutert. Es zeigen:

Fig. 1 ein erstes Ausführungsbeispiel eines Schiebehebedachs in perspektivischer Teilansicht, mit einem die Dachöffnung verschliessenden durchsichtigen Deckel, unterhalb dem eine verschiebbare Schiebeblende angeordnet ist,

Fig. 2 das Schiebehebedach nach Fig. 1 in einer Schnittansicht von der Seite,

Fig. 3 das Ausführungsbeispiel nach Fig. 1, bei angehobenem Deckel,

Fig. 4 das Schiebehebedach nach Fig. 3 in einer Schnittansicht von der Seite,

Fig. 5 das Ausführungsbeispiel nach Fig. 1 bei abgesenktem und mit der Schiebeblende gekuppeltem Deckel,

Fig. 6 das Schiebehebedach nach Fig. 5 in einer Schnittansicht von der Seite,

Fig. 7 ein zweites, gegenüber der Fig. 1 leicht abgeändertes Ausführungsbeispiel mit einem undurchsichtigen Deckel aus Stahl,

Fig. 8 ein drittes Ausführungsbeispiel in Explosionsdarstellung, mit einem am Schlitten gelagerten Ritzelement,

Fig. 9 ein gegenüber Fig. 8 am Führungsteil leicht agbeändertes viertes Ausführungsbeispiel in Draufsicht,

Fig. 10 eine Schnittansicht nach Linie X-X in Fig. 9 und

Fig. 11 eine Schnittansicht nach Linie XI-XI in Fig. 10.

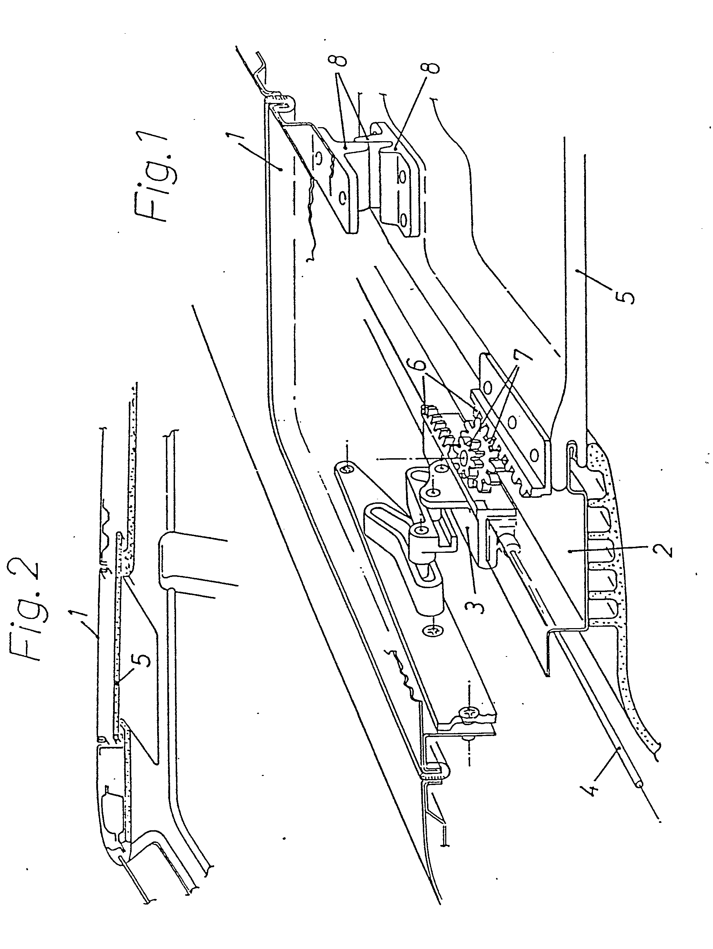

In Fig. 1 ist in einem ersten Ausführungsbeispiel ein Schiebehebedach im Dachbereich eines Kraftfahrzeugs in Schliessstellung dargestellt, in der die Dachöffnung von einem durchsichtigen Deckel 1 verschlossen ist. Dieser ist zwischen der Schliessstellung und einer Öffnungsstellung, in welcher der Deckel 1 in einen Aufnahmeraum im Fahrzeugdach eingeschoben ist, auf zwei seitlichen, karosserieseitig befestigten Führungsschienen 2 verschiebbar. Die Führungsschienen 2 sind U-förmig mit nach oben gerichteten, ungleich langen Schenkeln ausgebildet, wobei vom oberen Rand eines jeden Schenkels ein Führungssteg seitlich absteht. Auf dem äusseren, längeren Führungssteg, ist ein Schlitten 3 über ein angetriebenes Seil 4 längsverschiebbar angeordnet, das sich bei der Übertragung von Druckkräften in einem nicht dargestellten Führungskanal abstützt. Der Deckel 1 ist in Schliessstellung über eine mit dem Schlitten 3 verbundene Hebe- und Absenkvorrichtung etwa um seine Vorderkante nach oben oder zum Einfahren in die Öffungsstellung ein Stück nach unten schwenkbar. Unterhalb des Deckels 1 ist eine als Sonnenblende ausgebildete undurchsichtige Schiebeblende 5 angeordnet, die seitlich U-förmig ausgebildet ist und mit ihren Schenkeln die beiden inneren Stege der Führungsschienen 2 umgreift. Dadurch kann die Schiebeblende 5 ebenso wie der Deckel 1 zwischen der Schliessstellung und der Öffnungsstellung verschoben werden. Die Schiebeblende 5 könnte aber auch lichtreflektierend ausgebildet sein. Ein besonderer Vorteil der Erfindung ist in Schliessstellung des Deckels 1 und der Schiebeblende 5 darin zu sehen, dass der zur Be- oder Entlüftung des Fahrgastinnenraumes angehobene Deckel 1 während des Anhebens gleichzeitig die Schiebeblende 5 über eine Verstelleinrichtung ein Stück zurück verlagert, wodurch ein Be- oder Entlüftungskanal geschaffen wird, der eine geräuscharme und zugfreie Be- oder Entlüftung des Fahrzeuginnenraumes ermöglicht. Dies wird dadurch erreicht, dass an der Innenseite des Schlittens 3 und an der Aussenseite der Schiebeblende 5 je eine Geradverzahnung 6 in unterschiedlichen Höhen ausgebildet sind, die mit zwei geradverzahnten, übereinander angeordneten und miteinander verbundenen Aussenstirnrädern 7, die unterschiedliche Aussendurchmesser aufweisen, beim Anheben des Deckels 1 zusammenwirken. Dabei ist das obere, kleinere Aussenstirnrad der Geradverzahnung 6 des Schlittens 3 und das grössere Aussenstirnrad der Geradverzahnung 6 der Schiebeblende 5 zugeordnet. Beide Aussenstirnräder 7 sind um eine gemeinsame, an der Führungsschiene 2 ausgebildete, etwa vertikale Drehachse drehbar. Es ist aber auch möglich, die Drehachse der Aussenstirnräder 7 und die Geradverzahnung 6 in ihrer Lage anders anzuordnen, beispielsweise mit vertikal verlaufenden Geradverzahnungen 6 und mit um eine horizontale Drehachse drehbaren Aussenstirnrädern 7. Es ist auch möglich das in dem ersten Ausführungsbeispiel oben angeordnete Aussenstirnrad 7 mit einem grösseren Durchmesser zu versehen als das untere. Ebenso kann die Verstelleinrichtung anstelle von zwei Aussenstirnrädern 7 nur ein einzelnes Ritzelement aufweisen. In diesem Fall können die beiden Geradverzahnungen 6 in einer Ebene angeordnet sein. Bei dem ersten Ausführungsbeispiel nach Fig. 1 befindet sich in Schliessstellung der Schiebeblende 5 der hintere Bereich der Geradverzahnung 6 der Schiebeblende 5 mit dem unteren, grösseren Aussenstirnrad 7 im Zahneingriff. In Schliessstellung des Deckels 1 dagegen, wirkt die Geradverzahnung 6 des Schlittens 3 zunächst nicht mit dem kleineren Aussenstirnrad 7 zusammen, jedoch bei beginnendem Vorwärtsschieben des Schlittens 3. Auf diese Weise wird in Schliessstellung des Deckels 1 erreicht, dass die Schiebeblende 5 allein zurückgeschoben werden kann. Erst wenn der Schlitten 3 beim Nachobenschwenken des Deckels 1 nach vorne verlagert

wird und in Zahneingriff mit dem zugeordneten Aussenstirnrad 7 gelangt, ist eine Zwangskupplung der Schlittenbewegung mit der Schiebeblende 5 gegeben, wodurch bei ausgestelltem Deckel 1 ein weiteres Zurückschieben der Schiebeblende 5 nicht möglich ist. Um aber die Schiebeblende 5 bei diesem Ausführungsbeispiel doch zurückschieben zu können, ist zwischen den beiden Aussenstirnrädern 7 eine nicht dargestellte Rastkupplung angeordnet, die beide Aussenstirnräder 7 aneinander kuppelt und ab einer bestimmten Belastung eine Verdrehung der beiden Aussenstirnräder 7 gegeneinander ermöglicht. Es ist auch möglich, wenigstens eine der beiden Geradverzahnungen 6 so auszubilden, dass diese von dem einzelnen Ritzelement oder von dem zugeordneten Aussenstirnrad 7 wegverlagerbar ist. Ist jedoch eine Rastkupplung oder Rückverlagerbarkeit wenigstens einer Geradverzahnung 6 nicht vorgesehen und beabsichtigt, die Schiebeblende 5 in offener Stellung bei nach oben ausgestelltem Deckel 1 zu halten, so ist zunächst die Schiebeblende 5 in die gewünschte Stellung zurückzuziehen, in der die Geradverzahnung 6 der Schiebeblende 5 auch ausser Zahneingriff gelangt und erst dann ist der Deckel 1 nach oben auszustellen.

Um ein gleichzeitiges Einfahren des Deckels 1 und der Schiebeblende 5 in die Öffnungsstellung zu ermöglichen, ist im hinteren Bereich des Deckels 1 ein nach unten gerichteter Mitnehmer 8 vorgesehen, der mit seiner Hinterseite mit der Vorderseite eines nach oben gerichteten Mitnehmers 8 der Schiebeblende 5 in der Schliessstellung und beim Zurückschieben des Deckels 1 zusammenwirkt und bei nach oben geschwenktem Deckel 1 ausser Eingriff gelangt. Vor dem Mitnehmer 8 der Schiebeblende 5 ist ein weiterer Mitnehmer 8 mit verminderter Höhe angeordnet, der von dem Mitnehmer 8 des Deckels 1 nur bei abgesenktem Deckel 1 hintergriffen wird. Die beiden Mitnehmer 8 der Schiebeblende 5 verlaufen etwa in Querrichtung und sind nach oben und der Mitnehmer 8 des Deckels 1 ist nach unten bis jeweils zu einem halbkreisförmigen Scheitel keilförmig verjüngt ausgebildet. Die beiden Mitnehmer 8 der Schiebeblende 5 bilden dabei einen Zwischenraum, in dem sich der Mitnehmer 8 des Deckels 1 verkeilen kann und doch wieder leicht lösbar ist. Der vordere Mitnehmer 8 der Schiebeblende 5 kann bei einem durchsichtigen Deckel 1 aber auch weggelassen werden.

Das in Fig. 1 dargestellte Schiebehebedach ist in Fig. 2 in einer Schnittansicht von der Seite dargestellt, wobei die Anordnung des Deckels 1 und der Schiebeblende 5 in Schliessstellung deutlich wird.

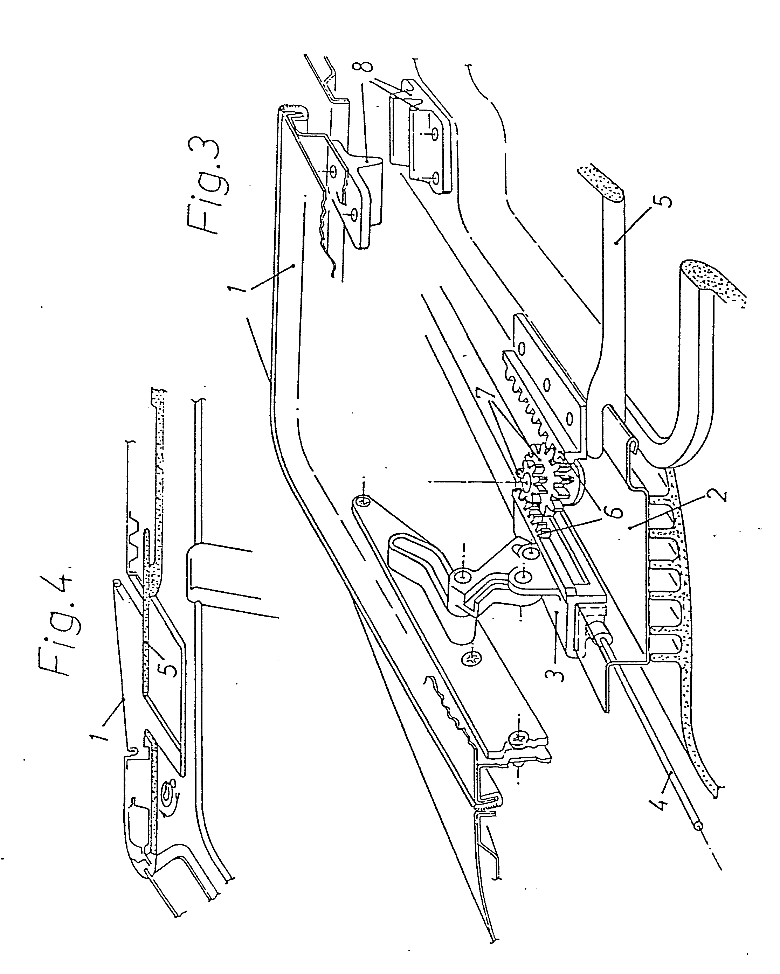

Wie man aus Fig. 3 erkennt, ist bei angehobenem Deckel 1 der hintere Mitnehmer 8 des Deckels 1 von den Mitnehmern 8 der Schiebeblende 5 gelöst und die Schiebeblende in eine geräusch- und weitgehend zugfreie Stellung zurückgeschoben. Beide Geradverzahnungen 6 befinden sich mit den zugeordneten Aussenstirnrädern 7 im Zahneingriff. Ist zwischen den Aussenstirnrädern 7 keine Rastkupplung vorgesehen und auch keine der beiden Geradverzahnungen 6 wegverlagerbar, so kann die Schiebeblende 5 nicht weiter zurückgeschoben werden. Dies hat den Vorteil, dass das Fahrzeug in dieser Stellung unbeaufsichtigt geparkt werden kann, ohne die Einbruchs- oder Diebstahlsgefahr zu erhöhen. Insbesondere in heissen Jahreszeiten wird dadurch ein übermässiges Aufheizen des Fahrgastinnenraumes vermieden. Zum Schutz vor Einbruch oder Diebstahl ist ferner eine Arretiereinrichtung vorgesehen, mit der die Schiebeblende 5 wenigstens bei hochgeschwenktem Deckel 1 arretierbar ist. Dies ist dann besonders vorteilhaft, wenn wie in dem ersten Ausführungsbeispiel eine Rastkupplung zwischen den Aussenstirnrädern 7 vorgesehen ist, die in jeder Stellung eine Rückverlagerung der Schiebeblende 5 ermöglicht.

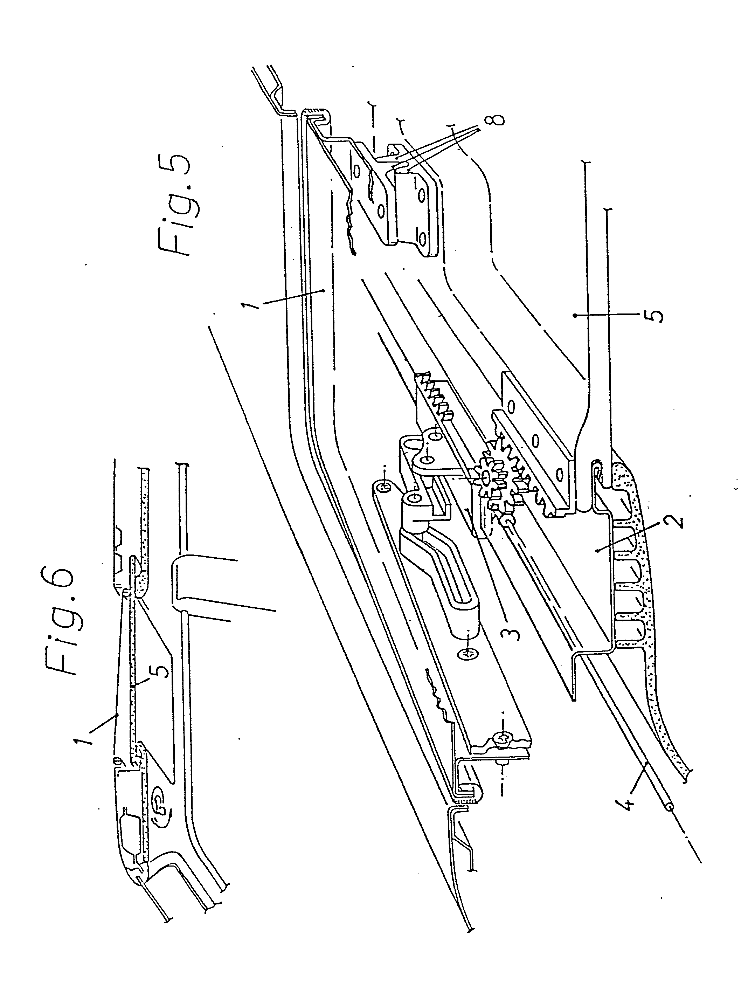

In Fig. 4 sind der in Fig. 3 abgebildete Deckel 1 und die zwangsweise über die Verstelleinrichtung ein Stück zurückverlagerte Schiebeblende 5 dargestellt, wobei der entstehende Entlüftungskanal besonders deutlich zu erkennen ist.

In Fig. 5 ist der hintere Bereich des Deckels 1 abgesenkt dargestellt, wobei der von dem Deckel 1 nach unten abstehende Mitnehmer 8 zwischen die beiden Mitnehmer 8 der in Schliessstellung befindlichen Schiebeblende 5 greift. Bei einer weiteren Bewegung des Schlittens 3 nach hinten wird der Deckel 1 gemeinsam mit der Schiebeblende 5 in die Öffnungsstellung verlagert, wobei der Deckel 1 so geführt ist, dass er zunächst in eine zu Schiebeblende 5 etwa parallele Lage gelangt.

In Fig. 6 ist der in Fig. 5 hinten abgesenkte Deckel 1 und die in Schliessstellung befindliche Schiebeblende 5 von der Seite dargestellt.

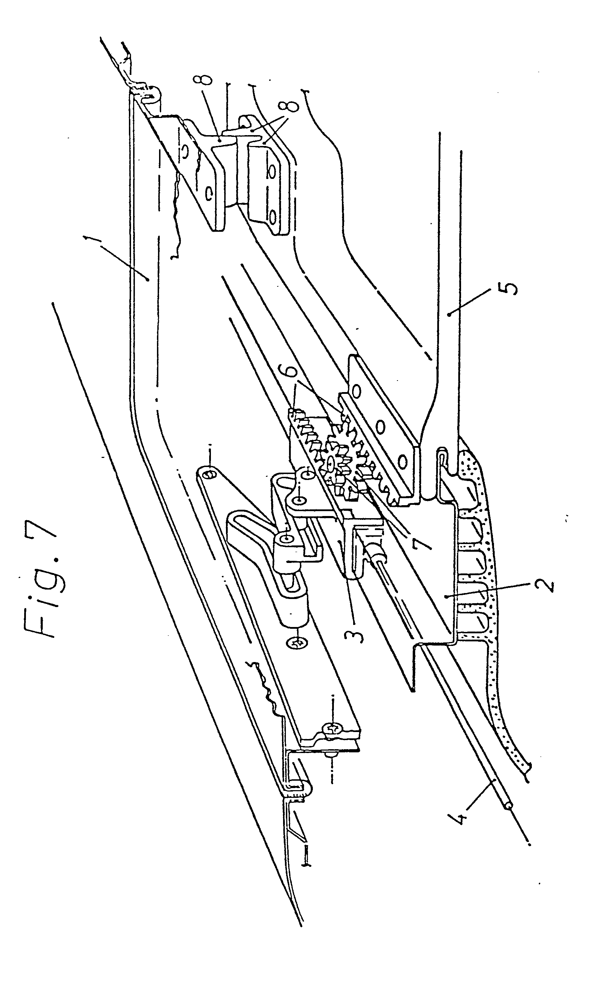

Ein zweites Ausführungsbeispiel der Erfindung ist in Fig. 7 in Schliessstellung des Deckels 1 und der Schiebeblende 5 dargestellt, das weitgehend mit dem ersten Ausführungsbeispiel übereinstimmt und gegenüber diesem folgende Unterschiede aufweist. Der Deckel 1 ist undurchsichtig aus Stahl gefertigt, so dass eine lichtreflektierende Ausbildung der Schiebeblende 5 nicht sinnvoll ist. Der vordere Mitnehmer 8 der Schiebeblende 5 ist nicht wahlweise sondern fest vorgesehen. Bei dem zweiten Ausführungsbeispiel ist eine Rastkupplung zwischen den beiden Aussenstirnrädern 7 ebenso nicht vorgesehen, wie ein Wegverlagern einer der beiden Geradverzahnungen 6. In der dargestellten Schliessstellung des Deckels 1 ist der vorderste Zahn der Geradverzahnung 6 des Schlittens 3 mit dem zugeordneten Aussenstirnrad 7 derart teilweise im Zahneingriff, dass sich die Aussenstirnräder 7 beim Zurückschieben des Schlittens 3 nicht bewegen und in dieser Schliessstellung des Deckels 1 ein Zurückschieben der Schiebeblende 5 von diesem ersten Zahn durch Festhalten der beiden fest verbundenen Aussenstirnräder 7 verhindert wird. Diese Massnahme ist bei dem Deckel 1 aus Stahl deshalb vorgesehen, da sonst bei gegenüber dem Deckel 1 weiter zurückgeschobener Schiebeblende 5 vom Fahrgastraum her unansehnliche, zum Teil verschmutzte Bauteile aus Metall sichtbar werden. Bei einem durchsichtigen Deckel 1, z.B. aus Glas, wird dagegen bereits bei der Auslegung und Wahl der Materialien auf ein ansprechendes optisches Erscheinungsbild geachtet. Es ist jedoch selbstverständlich auch möglich, ein Schiebehebedach mit einem Deckel 1 aus Stahl ebenso auszubilden, wie das im ersten Ausführungsbeispiel beschriebene Schiebehebedach, das einen durchsichtigen Deckel 1 aufweist.

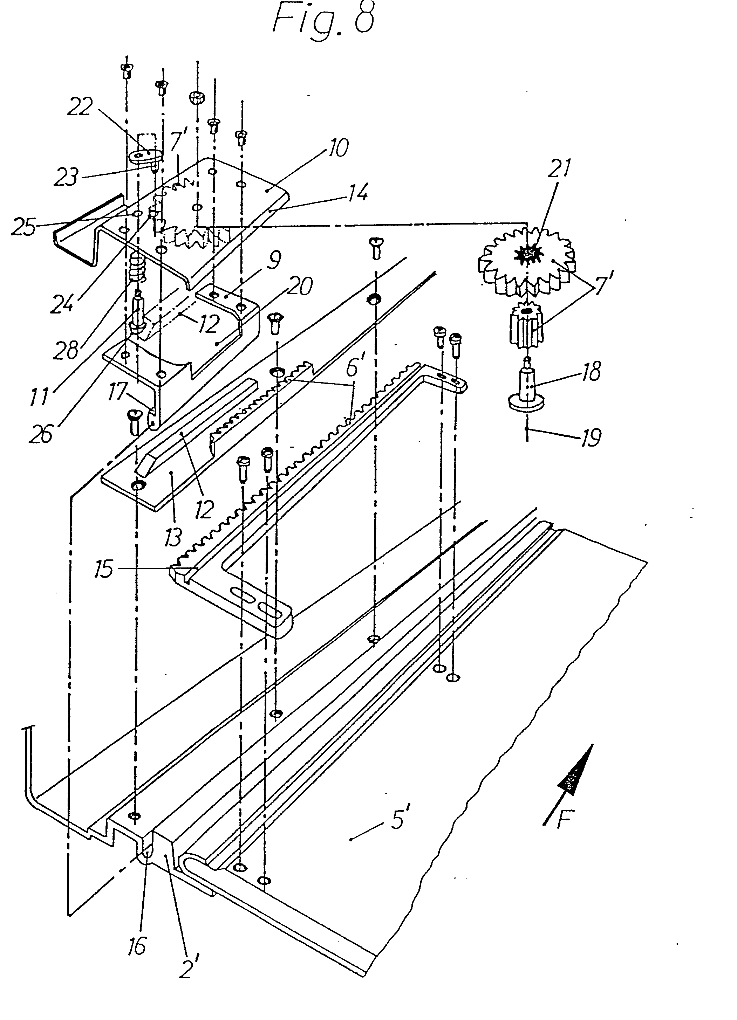

Bei dem in Fig. 8 dargestellten dritten Ausführungsbeispiel ist unterhalb eines die Dachöffnung eines Kraftfahrzeugs verschliessbaren, nicht dargestellten Deckels eine im Dachbereich in seitlichen Führungsschienen 2' längsverfahrbare Schiebeblende 5' angeordnet. Die Frontseite des Fahrzeugs liegt in Richtung des Pfeiles F, der die Fahrtrichtung angibt. Eine nicht abgebildete Hebe- und Absenkvorrichtung für den Deckel weist zwei seitliche, auf den Führungsschienen 2' in Verschieberichtung der Schiebeblende 5' verfahrbare Schlitten auf. Da bezüglich der Längsachse weitgehend symmetrische Verhältnisse vorliegen, ist in der Figur nur ein Seitenbereich dargestellt. Der Schlitten besteht bei dem Ausführungsbeispiel aus einem winkelförmigen Führungsteil 9 und einer an der Oberseite des horizontalen Schenkels damit verbundenen Stützplatte 10. Der nach unten gerichtete Schenkel des Führungsteils 9 ist an seinem unteren Rand gerundet und von einer entsprechenden Führungsnut 16 mit parallelen Seitenwänden in der Führungsnut 16 mit parallelen Seitenwänden in der Führungsschiene 2' geführt. Der untere Rand des Führungsteils 9 und der Boden der Führungsnut 16 können aber auch eben, beispielsweise abgeschrägt sein. Ebenso ist es nicht erforderlich, dass die Führungsnut 16 und das Führungsteil 9 parallele Führungswände aufweisen. Diese können auch im Querschnitt V-förmig geneigt sein. Um im eingebauten Zustand eine Verlagerung des Führungsteils 9 aus der Führungsnut 16 zu verhindern, weist der vertikale Schenkel des Führungsteils 9 an seiner Innenseite einen Absatz 17 auf, der von einem Teil der Führungsschiene 2', einer mit dieser verbindbaren Halteplatte 13, hintergriffen wird. Im seitlichen oberen Randbereich der Schiebeblende 5' und im zugewandten Randbereich der Halteplatte 13 ist jeweils eine zur Fahrzeugseite gerichtete Geradverzahnung 6' vorgesehen, die an beide vertikalen Schenkelseiten des Führungsteils 9 angrenzende in Verschieberichtung der Schiebeblende 5' verlaufen. Den beiden Geradverzahnungen 6' ist ein Ritzelelement zugeordnet, das aus zwei übereinander angeordneten, drehfest verbundenen Aussenstirnrädern 7' besteht, die durch eine die Aussenstirnräder 7' axial durchdringende Befestigungsschraube 18 von unten, um eine vertikale Achse 19 drehbar, mit dem horizontalen Schenkel der Stützplatte 10 verbunden sind. Damit das obere, grössere Aussenstirnrad 7' mit der Geradverzahnung 6' der Schiebeblende 5' in Zahneingriff gelangen kann, ist im oberen seitlichen Bereich des Führungsteiles 9 eine entsprechenden Aussspa-

rung 20 vorgesehen, die im Ausführungsbeispiel in Querrichtung durch den gesamten oberen Schenkel des Führungsteiles 9 verläuft. Eine drehfeste Verbindung der beiden Aussenstirnräder 7′ wird bei dem Ausführungsbeispiel dadurch erreicht, dass das grössere Aussenstirnrad 7′ eine der Aussenverzahnung des kleineren Aussenstirnrades 7′ entsprechende Innenverzahnung 21 aufweist, in die das kleinere Aussenstirnrad 7′ einsteckbar ist. Ebenso ist es aber auch möglich, die drehfeste Verbindung auf andere Weise zu erreichen. In Schliessstellung der Schiebeblende 5′ des Deckels ist der hintere Bereich der Geradverzahnung 6′ der Schiebeblende 5′ im Zahneingriff mit dem oberen Aussenstirnrad 7′ des Ritzelements. In Schliessstellung des Deckels steht der hinterste Zahn der Geradverzahnung 6′ der Halteplatte 13 unmittelbar vor dem Zahneingriff mit dem unteren, kleineren Aussenstirnrad 7′. Auf diese Weise kann die Schiebeblende 5′ von Hand zurückgezogen werden, wenn der Deckel nicht ausgestellt ist. Wird der Schlitten 9, 10 beim Ausstellen des Deckels nach vorne verlagert, so gelangt das untere Aussenstirnrad 7′ in Zahneingriff mit der an der Halteplatte 13 ausgebildeten Geradverzahnung 6′ und verlagert beim weiteren Ausstellen des Deckels die darunter befindliche Schiebeblende 5′ zwangsweise zur zugfreien Be- oder Entlüftung des Fahrzeuginnenraumes, entsprechend der Übersetzung der beiden Aussenstirnräder 7′, ein Stück nach rückwärts. Besonders vorteilhaft ist dabei, dass durch entsprechende Wahl der Übersetzung die Schiebeblende 5′ auch über einen grösseren Weg zwangsweise zurückverlagert werden kann. Zur vollständigen Öffnung des Daches ist sowohl der Deckel als auch die Schiebeblende 5′ zurückzuverlagern. Um nicht nacheinander jeweils den Deckel und die Schiebeblende 5′ öffnen und schliessen zu müssen, ist eine Verriegelungseinrichtung vorgesehen, durch die das Ritzelement 7′ mit dem Schlitten 9, 10 drehfest verbindbar ist und dadurch ein gemeinsames Zurückschieben der Schiebeblende 5′ und des mit dem Schlitten 9, 10 verbundenen Deckels ermöglicht. Die Verriegelungseinrichtung weist einen oberhalb der Stützplatte 10 angeordneten Hebel 22 auf, von dem an einem Hebelende ein Sperrbolzen 23 nach unten absteht, der eine Bolzenführung 24 in der Stützplatte 10 durchdringt und in Sperrstellung axial in die Verzahnung des oberen Aussenstirnrades 7′ hineinragt und dadurch eine Verdrehung desselben verhindert. Um den Sperrbolzen 23 von seiner Sperrstellung in seine Entriegelungsstellung verlagern zu können, in der sich das obere Aussenstirnrad 7′ um seine Achse 19 drehen kann, ist in der Stützplatte 10 eine Öffnung 25 ausgebildet, durch die ein Entriegelungsbolzen 11 in das freie Ende des Hebels 22 von unten einschraubbar und in einem Verstellbereich in der Öffnung 25 axial verschiebbar ist. Zwischen der Unterseite der Stützplatte 10 und dem unten radial vorstehenden Kopf 26 des Entriegelungsbolzens 11 ist eine Druckfeder 28 angeordnet, die den Hebel 22 in seine Sperrstellung belastet. Der axiale Verstellbereich des Entriegelungsbolzens 11 ist so bemessen, dass der Sperrbolzen 23 in keiner Betriebsstellung aus der Bolzenführung 24 in der Stützplatte 10 gelangt. Zur seitlichen Führung der Schiebeblende 5′ ist an dem der Schiebeblende 5′ zugewandten seitlichen Rand der Stützplatte 10 ein vertikal nach unten abstehender Längssteg 14 vorgesehen, der in eine Längsnut 15 neben der Geradverzahnung 6′ der Schiebeblende 5′ eingreift.

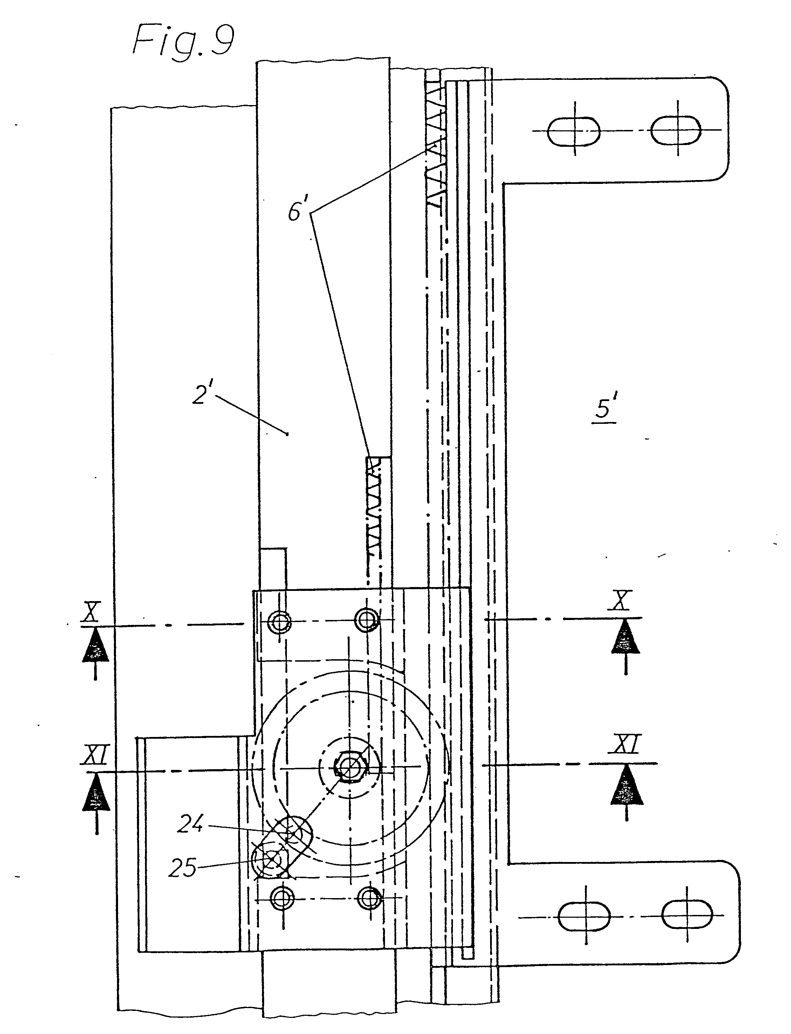

In Fig. 9 ist ein viertes Ausführungsbeispiel in Draufsicht dargestellt, das im wesentlichen dem Ausführungsbeispiel nach Fig. 8 entspricht und lediglich am Führungsteil abgeändert wurde.

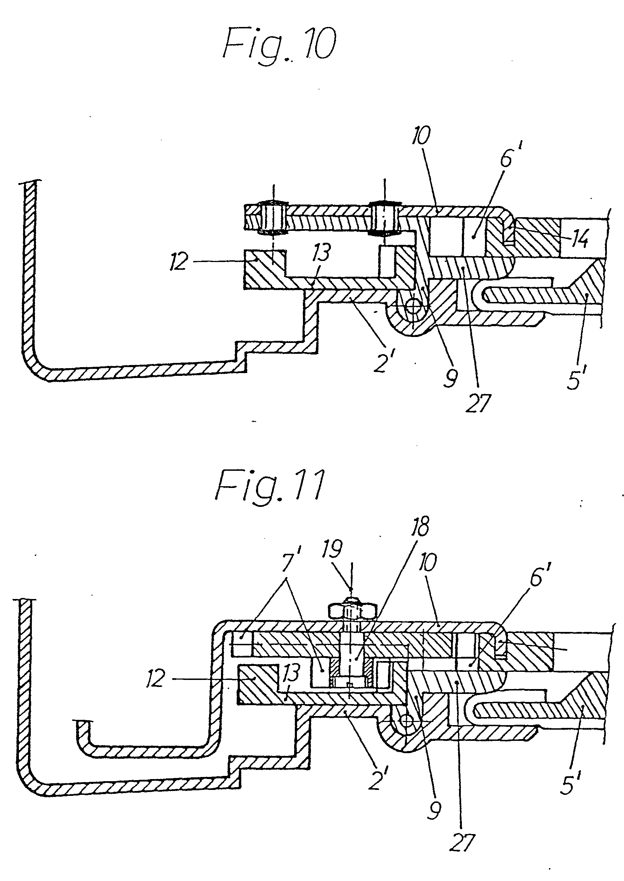

Wie es in Fig. 10 dargestellt ist, weist das Führungsteil 9, anders als bei der Ausführung nach Fig. 8, einen vom vertikalen Schenkel des Führungsteils 9 seitlich abstehenden Führungssteg 27 zur vertikalen Führung des seitlichen Randes der Schiebeblende 5′ auf.

Fig. 11 gibt eine Schnittansicht nach Linie XI-XI der Fig. 9, in der insbesondere die Anordnung der beiden Geradverzahnungen 6′ der Schiebeblende 5′ und der Führungsschiene 2′ (Halteplatte 13) und die beiden zugeordneten Aussenstirnräder 7′ dargestellt sind.

Bei den Ausführungsbeispielen nach Fig. 8 bis 11 ist die Schiebeblende 5′ mittelbar von den Führungsschienen 2′ seitlich geführt. Ebenso könnte die Schiebeblende 5′ aber auch, beispielsweise ähnlich wie in den Ausführungsbeispielen nach Fig. 1 bis 7, unmittelbar von den Führungsschienen 2′ geführt sein.

## Patentansprüche

1. Schiebedach für ein Fahrzeug, insbesondere für ein Kraftfahrzeug, mit einem Deckel (1), der aus einer Schliessstellung in eine Aufbewahrungsstellung verschiebbar ist, in der sich der Deckel (1) wenigstens teilweise in einem im Fahrzeugdach ausgebildeten Aufnahmeraum befindet und der ferner, ausgehend von der Schliessstellung, um sein Vorderkante nach oben schwenkbar ist, sowie mit einer unterhalb des Deckels (1) angeordneten Schiebeblende (5, 5′), die mit ihren Seiten in karosserieseitig befestigten Führungsschienen (2, 2′) zwischen der Schliessstellung und der Öffnungsstellung im Fahrzeugdach verschiebbar ist, mit einer Verstelleinrichtung, die beim Nachobenschwenken des Deckels (1) die Schiebeblende (5, 5′) aus ihrer Schliessstellung ein Stück in Richtung Öffnungsstellung und beim Einschwenken des ausgestellten Deckels (1) die Schiebeblende (5, 5′) in ihre Schliessstellung verlagert.

2. Schiebehebedach nach Anspruch 1, mit einer Hebe- und Absenkvorrichtung, die einen auf der Führungsschiene längsverfahrbaren Schlitten aufweist, der über ein angetriebenes Seil oder dergleichen verschiebbar ist, dadurch gekennzeichnet, dass sowohl am Schlitten (3) als auch an der Schiebeblende (5) je eine in Verschieberichtung verlaufende Geradverzahnung (6) ausgebildet sind, denen ein an der Führungsschiene (2) gelagertes Ritzelement zugeordnet ist.

3. Schiebedach nach Anspruch 1, mit einer Hebe- und Absenkvorrichtung, die einen auf der Führungsschiene längsverfahrbaren Schlitten aufweist, der über ein angetriebenes Seil oder dergleichen verschiebbar ist, dadurch gekennzeichnet, dass sowohl an der Führungsschiene (2') als auch an der Schiebeblende (5') je eine in Verschieberichtung verlaufende Geradverzahnung (6') ausgebildet sind, denen ein am Schlitten (Führungsteil 9, Stützplatte 10) gelagertes Ritzelement zugeordnet ist.

4. Schiebeblende nach Anspruch 2 oder 3, dadurch gekennzeichnet, dass das Ritzelement zwei geradverzahnte, koaxial angeordnete und miteinander drehfest verbundenen Aussenstirnräder (7, 7') mit unterschiedlichen Durchmessern umfasst, wobei das grössere Aussenstirnrad (7, 7') der Geradverzahnung (6, 6') der Schiebeblende (5, 5') zugeordnet ist.

5. Schiebehebedach nach Anspruch 2 oder 3, dadurch gekennzeichnet, dass die Zähne der Geradverzahnung (6, 6') zur Seite gerichtet sind und die Drehachse des Ritzelements etwa vertikal verläuft.

6. Schiebehebedach nach Anspruch 2 oder 3, dadurch gekennzeichnet, dass in Schliessstellung der Schiebeblende (5, 5') der hintere Bereich ihrer Geradverzahnung (6, 6') mit dem Ritzelement im Zahneingriff ist.

7. Schiebehebedach nach Anspruch 6, dadurch gekennzeichnet, dass in Schliessstellung des Deckels (1) der vorderste Zahn der Geradverzahnung (6) des Schlittens (3) mit dem Ritzelement derart teilweise im Zahneingriff steht, dass sich das Ritzelement beim Zurückschieben des Schlittens (3) nicht bewegt und in Schliessstellung des Deckels (1) ein Zurückschieben der Schiebeblende (5) von diesem ersten Zahn durch Festhalten des Ritzelements verhindert wird.

8. Schiebehebedach nach Anspruch 6, dadurch gekennzeichnet, dass in Schliessstellung des Deckels (1) die Geradverzahnung (6) des Schlittens (3) nicht mit dem Ritzelement zusammenwirkt, jedoch bei beginnendem Vorwärtsschieben mit dem Ritzelement in Zahneingriff kommt.

9. Schiebehebedach nach Anspruch 2, dadurch gekennzeichnet, dass wenigstens eine der beiden Geradverzahnungen (6) aus ihrem Zahneingriff mit dem Ritzelement wegverlagerbar ist.

10. Schiebehebedach nach Anspruch 4, dadurch gekennzeichnet, dass die beiden Aussensirnräder (7, 7') über eine federbelastete Rastkupplung miteinander gekuppelt sind.

11. Schiebehebedach nach Anspruch 1, dadurch gekennzeichnet, dass im hinteren Bereich (1) ein nach unten gerichteter Mitnehmer (8) vorgesehen ist, der mit seiner Hinterseite mit der Vorderseite eines nach oben gerichteten Mitnehmers (8) der Schiebeblende (5) in der Schliessstellung und beim Zurückschieben des Deckels (1) zusammenwirkt und bei nach oben geschwenktem Deckel (1) ausser Eingriff gelangt.

12. Schiebehebedach nach Anspruch 11, dadurch gekennzeichnet, dass vor dem Mitnehmer (8) der Schiebeblende (5) ein weiterer Mitnehmer (8) mit verminderter Höhe angeordnet ist, der vom Mitnehmer (8) des Deckels (1) nur bei abgesenktem Deckel hintergriffen wird.

13. Schiebehebedach nach Anspruch 12, dadurch gekennzeichnet, dass sich die beiden Mitnehmer (8) der Schiebeblende (5) nach oben und der Mitnehmer (8) des Deckels (1) nach unten bis zu jeweils einem halbkreisförmigen Scheitel keilförmig verjüngt.

14. Schiebehebedach nach Anspruch 1, dadurch gekennzeichnet, dass der Deckel (1) durchsichtig ist und die Schiebeblende (5) lichtreflektierend und/oder undurchsichtig ausgebildet ist.

15. Schiebehebedach nach Anspruch 1, dadurch gekennzeichnet, dass die Schiebeblende (5) wenigstens bei hochgeschwenktem Deckel (1) arretierbar ist.

16. Schiebehebedach nach Anspruch 3, dadurch gekennzeichnet, dass in Schliessstellung des Deckels (1) der hinterste Zahn der Geradverzahnungen (6') der Führungsschiene (2') unmittelbar vor dem Zahneingriff mit dem Ritzelement steht.

17. Schiebehebedach nach Anspruch 3, dadurch gekennzeichnet, dass das Ritzelement über eine Verriegelungseinrichtung drehfest mit dem Schlitten (Führungsteil 9, Stützplatte 10) verbindbar ist.

18. Schiebehebedach nach Anspruch 17, dadurch gekennzeichnet, dass die Verriegelungseinrichtung beim Zusammenwirken des Ritzelements mit der Geradverzahnung (6') der Führungsschiene (2') zwangsweise entriegelt ist.

19. Schiebehebedach nach Anspruch 18, dadurch gekennzeichnet, dass die Verriegelungseinrichtung einen vom Schlitten (Führungsteil 9, Stützplatte 10) nach unten abstehenden Entriegelungsbolzen (11) und die Führungsschiene (2', Halteplatte 13) an ihrer Oberseite eine in Verschieberichtung verlaufende Anlaufleiste (12) aufweist, durch die der Entriegelungsbolzen (11) nach oben in seine Entriegelungsstellung verlagert wird.

20. Schiebehebedach nach Anspruch 17, dadurch gekennzeichnet, dass die Verriegelungseinrichtung von einer Feder (Druckfeder 28) in die Sperrstellung belastet ist.

21. Schiebehebedach nach Anspruch 3, dadurch gekennzeichnet, dass zur seitlichen Führung der Schiebeblende (5') an dem Schlitten (Stützplatte 10) ein vertikal nach unten gerichteter Längssteg (14) vorgesehen ist, der in eine Längsnut (15) der Schiebeblende (5') im Bereich ihrer Geradverzahnung (6') eingreift.

**Claims**

1. A sliding and lifting roof for a vehicle, more particularly a motor vehicle, comprising a cover (1) movable from a closed posititon to a storage position in which the cover (1) is at least partly disposed in a receiving chamber formed in the roof, the cover also being pivotable upwards around its front edge starting from the closed position, the roof also comprising a sliding shutter (5, 5') disposed under the cover (1) and having its sides movable in the vehicle roof between the closed position and the open position on guide rails (2, 2') secured at the sides of the vehicle body, and also comprising an adjusting device which, when the cover (1) is pivoted upwards, moves the sliding shutter (5, 5') from its closed position and some way towards the opening position, and, when the moved-out cover (1) is pivoted inwards, moves the sliding shutter (5, 5') into its closed position.

2. A sliding and lifting roof according to claim 1, comprising a lifting and lowering device comprising a slide drivable along the guide rail and movable via a driven cable or the like, characterised in that a straight gear-tooth system extending in the direction of movement is formed both on the slide (3) and also on the sliding shutter (5) and is associated with a spur element mounted on the guide rail (2).

3. A sliding and lifting roof according to claim 1, comprising a lifting and lowering device comprising a slide drivable along the guide rail and movable via a driven cable or the like, characterised in that a straight gear-tooth system (6') extending in the direction of movement is formed both on the guide rail (2') and also on the sliding shutter (5') and is associated with a spur element mounted on the slide (guide part 9, supporting plate 10).

4. A sliding and lifting roof according to claim 2 or 3, characterised in that the spur element comprises two straight-toothed, coaxially disposed and non-rotatably interconnected outer spur gears (7, 7') having different diameters, the larger outer stern gear (7, 7') being associated with the straight gear-toothed system (6, 6') of the sliding shutter (5, 5').

5. A sliding and lifting roof according to claim 2 or 3, characterised in that the teeth of the gear-tooth system (6, 6') extend towards the side and the axis of rotation of the spur element extends substantially vertically.

6. A sliding and lifting roof according to claim 2 or 3, characterised in that in the closure direction of the sliding shutter (5, 5') the rear region of its straight gear-tooth system (6, 6') is in toothed engagement with the spur element.

7. A sliding and lifting roof according to claim 6, characterised in that in the closed position of the cover (1) the foremost tooth of the straight gear-tooth system (6) of the slide (3) is partly in toothed engagement with the spur element in such a manner that when the slide (3) slides backwards the spur element does not move, and when the cover (1) is in the closed position the sliding shutter (5) is prevented from sliding backwards by the first tooth through locking of the spur element.

8. A sliding and lifting roof according to claim 6, characterised in that when the cover (1) is in the closed position, the straight gear-tooth system (6) of the slide (3) does not cooperate with the spur element, but is toothod engagement with the spur element, but is in toothed engagement with the spur element when beginning to slide forward.

9. A sliding and lifting roof according to claim 2, characterised in that at least one of the two straight gear-tooth systems (6) is movable out of toothed engagement with the spur element.

10. A sliding and lifting roof according to claim 4, characterised in that the two outer spur gears (7, 7') are coupled together via a spring-loaded catch coupling.

11. A sliding and lifting roof according to claim 1, characterised in that a downardly directed cam (8) is provided in the rear region of the cover (1) and the rear of the cam cooperates with the front of an upwardly directed cam (8) of the sliding shutter (5) in the closed position and when the cover (1) is slid back, and is disengaged when the cover (1) is pivoted upwards.

12. A sliding and lifting roof according to claim 11, characterised in that an additional cam (8) of reduced height is disposed in front of the cam (8) of the sliding shutter (5) and a cam (8) of the cover (1) extends behind the additional cam only when the cover is lowered.

13. A sliding and lifting roof according to claim 12, characterised in that the two cams (8) of the sliding shutter (5) taper in a wedge shape upwards and the cam (8) of the cover (1) tapers downwards as far as a respective semicircular tip.

14. A sliding and lifting roof according to claim 1, characterised in that the cover (1) is transparent and the sliding shutter (5) is made light-reflecting and/or non-transparent.

15. A sliding and lifting roof according to claim 1, characterised in that the sliding shutter (5) is lockable at least when the cover (1) is pivoted upwards.

16. A sliding and lifting roof according to claim 3, characterised in that when the cover (1) is in the closed position, the rearmost tooth of the straight gear-tooth system (6') of the guide rail (2') is disposed just before engagement with the spur element.

17. A sliding and lifting roof according to claim 3, characterised in that the spur element is non-rotatably connectable to the slide (guide part 9, supporting plate 10) via a locking device.

18. A sliding and lifting roof according to claim 17, characterised in that the locking device is automatically unlocked when the spur element cooperates with the straight gear-tooth system (6') of the guide rail (2').

19. A sliding and lifting roof according to claim 18, characterised in that the locking device comprises an unlocking pin (11) projecting downwards from the slide (guide part 9, supporting plate 10) and the upper side of the guide rail (2', retaining plate 13), is formed with a run-up strip (12) extending in the direction of sliding and by means of which the unlocking pin (11) is moved upwards into its unlocked position.

20. A sliding and lifting roof according to claim 17, characterised in that the locking device is biased by a spring (compression spring 28) into the locked position.

21. A sliding and lifting roof according to claim 3, characterised in that for the purpose of laterally guiding the sliding shutter (5') on the slide (supporting plate 10), a vertically downwardly directed longitudinal web (14) is provided and engages in a longitudinal groove (15) in the sliding shutter (5') in the region of the straight geartooth system (6') thereof.

## Revendications

1. Toit ouvrant pour véhicule, en particulier pour véhicule automobile, comportant un couvercle (1) qui peut passer d'une position de fermeture à une position d'attente dans laquelle le couvercle (1) se trouve au moins partiellement dans un logement formé dans le pavillon du véhicule et qui en outre peut basculer en sortant de sa position de fermeture autour de son rebord antérieur, ainsi qu'un panneau (5, 5') placé en-dessous du couvercle (1) qui peut se déplacer sur le toit du véhicule par ses côtés dans des rails de guidage (2, 2') fixés du côté de la carrosserie, entre la position de fermeture et la position d'ouverture, un dispositif de réglage qui lors du basculement vers le haut du couvercle (1) déplace le panneau (5, 5') de sa position de fermeture légèrement en direction de la position d'ouverture et lors de la conversion du couvercle réglé (1) déplace le panneau (5, 5') dans sa position de fermeture.

2. Toit ouvrant selon la revendication 1, comportant un dispositif de levée et d'abaissement qui présente une glissière (3) déplaçable longitudinalement sur les rails de guidage, qui peut se déplacer grâce à un câble d'entraînement ou analogue, caractérisé en ce que, aussi bien sur la glissière (3) que sur le panneau coulissant (5), sont formées chaque fois une crémaillère (6) s'étendant dans le sens du déplacement, dont un élément denté supporté sur les rails de guidage (2) est associé.

3. Toit ouvrant selon la revendication 1, avec un dispositif de levée et d'abaissement qui comporte une glissière déplaçable longitudinalement sur les rails de guidage qui peut se déplacer grâce à un câble d'entraînement ou analogue, caractérisé en ce qu'aussi bien sur les rails de guidage (2') que sur le panneau coulissant (5') est formée une crémaillère s'étendant dans le sens du déplacement, dont un élément denté supporté sur une glissière (pièce de guidage 9, plaque d'appui 10) est associé.

4. Toit ouvrant selon la revendication 2 ou 3, caractérisé en ce que l'élément denté comprend deux pignons droits extérieurs solidaires en rotation (7, 7') disposés coaxialement et de diamètres différents, le pignon droit extérieur le plus grand (7, 7') étant associé à la crémaillère (6, 6') du panneau coulissant (5, 5').

5. Toit ouvrant selon la revendication 2 ou 5, caractérisé en ce que les dents de la crémaillère (6, 6') sont orientées latéralement et que l'axe de rotation de l'élément denté s'étend à peu près verticalement.

6. Toit ouvrant selon la revendication 2 ou 3, caractérisé en ce qu'en position de fermeture du panneau coulissant (5, 5'), la zone arrière de sa crémaillère (6, 6') est en prise avec l'élément denté.

7. Toit ouvrant selon la revendication 6, caractérisé en ce qu'en position de fermeture du couvercle (1), la dent la plus en avant de la crémaillère (6) de la glissière (3) est partiellement en prise avec l'élément denté, de telle sorte que ce dernier ne se déplace pas lors du retour de la glissière (3) et dans la position de fermeture du couvercle (1), on empêche un retour du panneau coulissant (5) à partir de cette première dent par blocage de l'élément denté.

8. Toit ouvrant selon la revendication 6, caractérisé en ce qu'en position de fermeture du couvercle (1), la crémaillère (5) de la glissière (3) ne coopère pas, mais lors du début du déplacement en avant vient en prise avec l'élément denté.

9. Toit ouvrant selon la revendication 2, caractérisé en ce qu'en moins une des deux crémaillères (6) peut se désengager de son engrènement avec l'élément denté.

10. Toit ouvrant selon la revendication 4, caractérisé en ce que les deux pignons droits extérieurs (7, 7') sont accouplés l'un à l'autre par un accouplement bloqué chargé par un ressort.

11. Toit ouvrant selon la revendication 1, caractérisé en ce que, dans la zone arrière du couvercle (1), on prévoit un système d'entraînement (8) dirigé vers le bas qui coopère par son côté arrière avec le côté antérieur d'un système d'entraînement (8) du panneau coulissant (5) en position de fermeture et lors du retour en arrière du couvercle (1) et vient en prise à l'extérieur quand le couvercle (1) est basculé ver le haut.

12. Toit ouvrant selon la revendication 11, caractérisé en ce qu'en avant du système d'entraînement (8) du panneau coulissant (5) est placé un autre système d'entraînement (8) de hauteur moindre qui vient en prise par le système d'entraînement (8) du couvercle (1) seulement quand le couvercle est abaissé.

13. Toit ouvrant selon la revendication 12, caractérisé en ce que les deux systèmes d'entraînement (8) vont en se rétrécissant en forme de coin vers le haut, pour ceux du panneau coulissant (5) et vers le bas pour celui du couvercle (1) jusqu'à ce que chacun présente un sommet en forme de demi-cercle.

14. Toit ouvrant selon la revendication 1, caractérisé en ce que le couvercle (1) est transparent et que le panneau coulissant (5) est formé de façon à réfléchir la lumière et/ou est opaque.

15. Toit ouvrant selon la revendication 1, caractérisé en ce que le panneau coulissant (5) peut être bloqué au moins quand le couvercle (1) est basculé vers le haut.

16. Toit ouvrant selon la revendication 3, caractérisé en ce qu'en position de fermeture du couvercle (1) la dent la plus en arrière de la crémaillère (6') des rails de guidage (2') se situe directement en avant de l'engrènement avec l'élément denté.

17. Toit ouvrant selon la revendication 3, caractérisé en ce qu'on peut rendre solidaire en rotation par un dispositif de verrouillage l'élément denté avec les glissières (pièce de guidage 9, plaque d'appui 10).

18. Toit ouvrant selon la revendication 17, caractérisé en ce que le dispositif de verrouillage est débloqué à force lors de la coopération de l'élément denté avec la crémaillère (6') des rails de guidage (2').

19. Toit ouvrant selon la revendication 18, caractérisé en ce que le dispositif de verrouillage comporte un boulon de déverrouillage (11) s'écartant vers le bas des glissières (pièce de guidage 9, plaque d'appui 10), et les rails de guidage 2', (plaque de support 13) et sur leur côté supérieur une ouverture (12) à travers laquelle le boulon de déverrouillage (11) est déplacé vers le haut dans sa position de déblocage.

20. Toit ouvrant selon la revendication 17, caractérisé en ce que le dispositif de verrouillage est chargé par un ressort (ressort de pression 28) en position de blocage.

21. Toit ouvrant selon la revendication 3, caractérisé en ce que pour le guidage latéral du panneau coulissant (5') sur les glissières (plaque d'appui 10), on prévoit un gradin allongé (14) dirigé vers le bas, qui s'engage dans une gorge allongée (15) du panneau coulissant (5') dans la zone de sa crémaillère (6').

Fig. 1

Fig. 2

EP 0 185 993 B1

Fig. 3

Fig. 4

13

Fig. 5

Fig. 6

Fig. 7

EP 0 185 993 B1

# Fig. 8

Fig.9

6'

2'

5'

X

X

XI

XI

24

25

Fig. 10

Fig. 11